(19) Europäisches Patentamt
European Patent Office
Office européen des brevets

(11) **EP 2 278 285 B1**

(12) **EUROPÄISCHE PATENTSCHRIFT**

(45) Veröffentlichungstag und Bekanntmachung des Hinweises auf die Patenterteilung:
**30.04.2014   Patentblatt 2014/18**

(51) Int Cl.:
*G01G 21/30* *(2006.01)*      *G01G 21/23* *(2006.01)*

(21) Anmeldenummer: **09166246.0**

(22) Anmeldetag: **23.07.2009**

(54) **Verbindbarer Lastaufnehmer**

Connectable load-bearer

Capteur de charge pouvant être relié

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**26.01.2011   Patentblatt 2011/04**

(73) Patentinhaber: **Mettler-Toledo AG**
**8606 Greifensee (CH)**

(72) Erfinder:
• **Birrer, Adrian**
  **8404, Winterthur (CH)**
• **Metzger, Andreas**
  **8708, Männedorf (CH)**
• **Köppel, Thomas**
  **8618, Oetwil am See (CH)**

(56) Entgegenhaltungen:
**DE-A1- 10 107 055      DE-A1-102005 055 753**
**GB-A- 478 369      GB-A- 2 055 438**

**Beschreibung**

Die Erfindung betrifft ein gravimetrisches Messinstrument mit einer Wägezelle die ein Lastübertragungsglied aufweist und mit welchem Lastübertragungsglied ein Lastaufnehmer lösbar verbindbar ist.

Gravimetrische Messinstrumente dieser Art dienen beispielsweise als Waagen und Wägemodule in vielen Bereichen der Industrie, insbesondere in Laboratorien von Forschungs- und Entwicklungsabteilungen, aber auch als Wägemodule in der Produktion, beispielsweise in der Qualitätskontrolle. Wägemodule sind Waagen mit von der Wägezelle und deren Gehäuse getrennt angeordneter Anzeige und/oder Eingabeeinheit.

Ein solches Wägemodul beschreibt die DE 10 2005 055 753 A1 zur Erfassung des Gewichts transportierter Güter auf einer Förderanlage und dabei diese Förderanlage zur Übertragung der zu erfassenden Gewichtskräfte auf dem Lastaufnehmer des Wägemoduls aufsitzt. Es offenbart eine elektrische und/oder mechanische Verbindung mittels einer zweiteiligen Steckverbindung, welche auf dem Lastaufnehmer der Wägezelle aufsitzt. Diese Verbindung soll die auf die Wägezelle aufgesetzte und mit ihr verbundene Förderanlage relativ zur Wägezelle fixieren. Dieses offenbarte Wägemodul weist keine lösbare Verbindung des Lastaufnehmers mit der Wägezelle auf.

In der EP 1 576 343 B1 ist ein Wägemodul mit einer Wägezelle schematisch im Schnitt dargestellt. Das am Lastaufnahmebereich der Wägezelle angeordnete Lastübertragungsglied ist an seinem freien Ende kegelstumpfförmig ausgebildet. Der dargestellte Lastaufnehmer weist eine zu diesem kegelstumpfförmigen Ende passende kegelförmige Bohrung auf. Üblicherweise weisen die Kegelstümpfe dieser lösbaren Verbindungsart eine geringe Kegelverjüngung auf, so dass auch bei aussermittiger Belastung des Lastaufnehmers dieser nicht vom Lastübertragungsglied kippt.

Aufgrund dieser geringen Kegelverjüngung entstehen im Bereich der Berührungsflächen ausserordentlich hohe Flächenbelastungen beziehungsweise ein hoher Lochleibungsdruck, weshalb diese Verbindungsart nur für Waagen mit niedrigen Lastbereichen geeignet ist, auch selbst dann, wenn die Verbindung aus Metall gefertigt ist. Ferner kann diese Verbindungsart nur dann eingesetzt werden, wenn die Ausrichtung des Lastaufnehmers zur Wägezelle, abgesehen von der Lage seines Massenschwerpunktes, keine Rolle spielt, folglich also nur bei rotationssymmetrischen Lastaufnehmern beziehungsweise Waagschalen.

Aus den vorangehend genannten Gründen ist diese Verbindungsart für Wägemodule im industriellen Bereich meistens ungeeignet. Üblicherweise wird der Lastaufnehmer deshalb am Lastübertragungsglied festgeschraubt. Dies hat den Nachteil, dass die Montage und Demontage des Lastaufnehmers mit erheblichem Zeitaufwand verbunden ist, da der ganze Lastaufnehmer relativ zur Wägezelle gedreht werden muss. Dies ist insbesondere dann problematisch, wenn einsatzspezifische Vorrichtungen wie beispielsweise Förderbänder, Klemmvorrichtungen für Behälter und dergleichen am Lastaufnehmer befestigt sind und die Raumverhältnisse derart knapp bemessen sind, dass zuerst diese einsatzspezifischen Vorrichtungen vom Lastaufnehmer entfernt werden müssen, bevor dieser vom Lastübertragungsglied abgeschraubt werden kann. Wägemodule mit einsatzspezifischen Vorrichtungen werden oft in Abfüll- und Kontrollvorrichtungen von Produktionsanlagen zur Portionierung und Kontrolle von Massengütern eingesetzt. Oft sind solche Anlagen mehrspurig konzipiert, das heisst, dass mehrere parallel angeordnete Wägemodule sowie deren Zufuhr- und Abfuhrvorrichtungen auf engstem Raum vorhanden sind.

Eine weitere bekannte Montagevariante ist, den Lastaufnehmer beziehungsweise die Waagschale mit einer in der Mittellängsachse des Lastaufnehmers und des Lastübertragungsgliedes angeordneten Schraube am Lastübertragungsglied zu fixieren. Dadurch lässt sich zwar der Lastaufnehmer einfacher vom Lastübertragungsglied lösen ohne dass der ganze Lastaufnehmer gedreht werden muss, aber es entsteht durch das Schraubenloch im Lastaufnehmer ein Leck, welches abgedichtet werden muss. In vielen Fällen sind solche Verschraubungen aus Hygienegründen und Reinigungsgründen höchst unerwünscht, da die Schraube in einer horizontalen Fläche angeordnet ist und sich Verunreinigungen um den Schraubenkopf ansammeln können. Es versteht sich von selbst, dass gerade bei hohen Anforderungen an die Sauberkeit solcher Produktionsanlagen, beispielsweise im Lebensmittel- und Pharmabereich, die rasche Montage und Demontage des Lastaufnehmers zu Reinigungszwecken von höchster Bedeutung ist.

Die Aufgabe der vorliegenden Erfindung ist deshalb, ein gravimetrisches Messinstrument mit einer Wägezelle zu schaffen, an deren Lastübertragungsglied ein Lastaufnehmer auf rasche und einfache Weise fixierbar und wieder entfernbar ist.

Diese Aufgabe wird durch ein gravimetrisches Messinstrument mit den Merkmalen des Anspruchs 1 gelöst. Weitere bevorzugte Ausführungsformen der Erfindung sind Bestandteil der abhängigen Ansprüche.

Ein gravimetrisches Messinstrument beinhaltet ein Gehäuse und eine Wägezelle, die ein Lastübertragungsglied aufweist. Mit diesem Lastübertragungsglied welches durch eine Durchführung (137) des Gehäuses (129) hindurchreicht, ist ein Lastaufnehmer lösbar verbindbar, wobei zwischen dem Gehäuse (129) und dem Lastaufnehmer (110) ein berührungsfreies Dichtungssystem (138) angeordnet ist. Am Lastübertragungsglied ist ein Anschlag und am Lastaufnehmer ein Gegenanschlag ausgebildet. Mittels eines am Lastaufnehmer und am Lastübertragungsglied angreifenden Exzenterbolzens kann der Anschlag gegen den Gegenanschlag gepresst werden, womit der Anschlag gegen den Gegenanschlag vorspannbar ist. Dadurch ist der Lastaufnehmer am Lastübertragungsglied starr fixierbar.

Anstatt dass eine Schraube oder gar der ganze Lastaufnehmer mittels vieler Umdrehungen festgeschraubt werden muss, kann durch simples Auflegen des Lastaufnehmers auf dem Lastübertragungsglied, durch das Einstecken des Exzenterbolzens und durch die nachfolgende, weniger als 360° betragende Drehung des Exzenterbolzens der Lastaufnehmer am Lastübertragungsglied starr fixiert werden.

In einer Ausführungsform der Erfindung sind bei fixiertem Lastaufnehmer der Anschlag und der Gegenanschlag in einer Ebene orthogonal zur Lastrichtung angeordnet. Mit Lastrichtung ist die Richtung der grössten, auf den Lastaufnehmer einwirkenden Kraft gemeint. Üblicherweise ist dies die Richtung der Schwerkraft. Dadurch ist die Position des Lastaufnehmers zur Wägezelle, beziehungsweise zur Umgebung des gravimetrischen Messinstruments in vertikaler Richtung stets genau definiert. Ferner erlaubt diese Anordnung des Anschlags und Gegenanschlags den Einsatz ebener Anschlagsflächen, welche im Vergleich zur oben erwähnten Kegelverbindung eine sehr hohe Tragfähigkeit aufweisen. Diese wird durch die Spannkraft des Exzenterbolzens auch nicht reduziert, weil die am Lastaufnehmer angreifenden Gewichtskräfte dieselbe Wirkrichtung aufweisen wie die auf die Anschlagflächen wirkende Spannkraft, deren Richtung durch die Lage der Anschlagflächen bestimmt wird. Die Spannkraft wird bei der Belastung des Lastaufnehmers vermindert, weshalb bei der Belastung des Lastaufnehmers keine Überbeanspruchung der Anschlagflächen entstehen kann.

Der Exzenterbolzen weist mindestens eine Lagerstelle und mindestens einen Exzenterzylinder auf. Die Lagerstelle ist vorzugsweise ebenfalls zylindrisch ausgestaltet. Ferner ist der Exzenterzylinder zur Lagerstelle mit einer definierten Exzentrizität angeordnet.

In einer weiteren Ausführungsform schneiden sich bei fixiertem Lastaufnehmer die Mittellängsachse des Lastübertragungsgliedes und die Mittellängsachse der Lagerstelle orthogonal. Dadurch wird eine gleichmässige Spannungsverteilung innerhalb der Verbindung erreicht, was zu einer weiteren Steigerung der Tragfähigkeit beiträgt.

Vorzugsweise weist das Lastübertragungsglied mindestens eine erste Bohrung zur Aufnahme des Exzenterzylinders und der Lastaufnehmer mindestens eine zweite Bohrung zur Aufnahme der Lagerstelle auf. Damit mit dem Exzenterbolzen eine Spannkraft erzeugbar ist, muss die Distanz zwischen dem Gegenanschlag und der Mittellängsachse der zweiten Bohrung kleiner sein als die Summe aus dem Abstand zwischen dem Anschlag und der Mittellängsachse der ersten Bohrung, der Exzentrizität und dem Radius des Exzenterzylinders, abzüglich dem Radius der zweiten Bohrung. Die Grösse der Exzentrizität, der Distanz des Abstandes und der Durchmesser der Bohrungen sowie der Lagerstelle und des Exzenterzylinders sind auf die Elastizität und Duktilität der miteinander in Eingriff stehenden Materialien abzustimmen, so dass der Exzenterbolzen in den Bohrungen nicht über die Totpunktlage des Exzenterbolzens gedreht werden kann und in der Folge ein Verlust an Spannkraft entsteht. Mit Totpunktlage ist diejenige Lage des Exzenterbolzens gemeint, in welcher die höchste Spannkraft erzeugbar ist. Das heisst, dass die Mittellängsachsen der zweiten Bohrung, der ersten Bohrung und des Exzenterzylinders in derselben Ebene und parallel zueinander angeordnet sind.

In den meisten Fällen ist ferner bei fixiertem Lastaufnehmer eine Selbsthemmung des Exzenterbolzens erwünscht, damit sich infolge von am Lastaufnehmer angreifenden Kräften oder Vibrationen der Exzenterbolzen nicht in den Bohrungen dreht. Dies könnte zu einer Trennung von Lastaufnehmer und Lastübertragungsglied führen und das gravimetrische Messinstrument beschädigen. Um näherungsweise diese Selbsthemmung zu erreichen, ist die um ein Übersetzungsverhältnis korrigierte Exzentrizität kleiner als das Produkt aus dem zwischen dem Exzenterzylinder und der ersten Bohrung vorhandenen Reibungskoeffizienten und dem Radius des Exzenterzylinders. Der Reibungskoeffizient ist abhängig von den Materialien und den Oberflächenbeschaffenheiten des Exzenterbolzens und des Lastübertragungsgliedes. Das bei fixiertem Lastaufnehmer massgebliche Übersetzungsverhältnis ist abhängig von der Position des Exzenterzylinders in der ersten Bohrung. Selbstverständlich existieren auch zwischen der Lagerstelle und der zweiten Bohrung Reibungskräfte, die die Selbsthemmung unterstützen.

Die Präzision der Wägeresultate bekannter Wägezellen werden durch sich ändernde Temperaturen mehr oder weniger stark beeinflusst. Gerade in den Haupteinsatzgebieten der vorliegenden Erfindung können die Wägegüter stark unterschiedliche Eigentemperaturen aufweisen, wenn sie auf den Lastaufnehmer aufgelegt werden. Damit keine Wärmeübertragung vom Lastaufnehmer zur Wägezelle erfolgt, kann das Lastübertragungsglied ein Material mit geringer Wärmeleitfähigkeit aufweisen. Vorzugweise ist ein Teil des Lastübertragungsgliedes aus Kunststoff oder einem keramischen Material gefertigt.

Ein weiterer Problemkreis bei gravimetrischen Messinstrumenten sind unterschiedliche Potentiale von verschiedenen Teilen. Durch elektrostatische Aufladung kann beispielsweise der Lastaufnehmer von den übrigen Teilen des gravimetrischen Messinstruments angezogen werden, was ebenfalls erhebliche Abweichungen der Messwerte von den tatsächlichen Gewichtswerten der Wägegüter verursachen kann. Um eine elektrostatische Aufladung des Lastaufnehmers zu vermeiden, ist die Wägezelle und der Lastaufnehmer vorzugsweise aus elektrisch leitfähigem Material gefertigt und zwischen der Wägezelle und dem Lastaufnehmer eine elektrisch leitfähige Verbindung, beispielsweise eine Kontaktierungsfeder angeordnet. Mit dieser Ausgestaltung kann sichergestellt werden, dass das Gehäuse des gravimetrischen Messinstruments, seine darin angeordnete Wägezelle und der Lastaufnehmer dasselbe elektrische Potential aufweisen.

Ein gravimetrisches Messinstrument mit einem derart durchkontaktierten Lastaufnehmer kann aber sehr anfällig auf elektromagnetische Einflüsse der Umgebung reagieren, da der Lastaufnehmer wie eine Antenne wirkt. Es hat sich überraschenderweise gezeigt, dass Kontaktierungsfedern in Form von Schraubendruckfedern oder Schraubenzugfedern besonders geeignet sind, diese Einwirkungen zu minimieren. Je mehr Windungen vorhanden sind, desto grösser ist die Dämpfungswirkung bezüglich der Übertragung von elektromagnetischen Störungen auf die Wägezelle und deren elektrische und elektromagnetischen Komponenten. Je länger somit das Teil geringer Wärmeleitfähigkeit des Lastübertragungsgliedes in Verbindung mit einer Kontaktierungsfeder mit möglichst hoher Windungszahl ist, desto besser können die Einwirkungen der vorangehend beschriebenen Umwelteinflüsse auf die Wägezelle verringert werden.

Das gravimetrische Messinstrument, beziehungsweise die Waage oder das Wägemodul sind in konventioneller Weise aufgebaut. Das heisst, dass eine Wägezelle in einem Gehäuse angeordnet ist. Das Gehäuse weist eine Durchführung auf, durch welche das mit der Wägezelle verbundene Lastübertragungsglied hindurchreicht. Je nach dem Einsatzort muss das Gehäuse bestimmte Dichtigkeitsanforderungen erfüllen, damit nicht Staub und/oder Feuchtigkeit zur Wägezelle vordringen können. Da sich der Lastaufnehmer und das Gehäuse nicht berühren dürfen, ist vorzugsweise zwischen dem Gehäuse und dem Lastaufnehmer ein berührungsfreies Dichtungssystem angeordnet. Ein solches Dichtungssystem kann eine Labyrinthdichtung sein, wie sie beispielsweise in der EP 1 576 343 B1 offenbart ist. Ferner kann das Lastübertragungsglied mit einer Überlastschutzvorrichtung versehen sein. Diese Überlastschutzvorrichtung weist ein Federelement auf, dessen Federkraft leicht höher ist als die maximale auf den Lastaufnehmer auflegbare Gewichtskraft. Sobald diese Federkraft überschritten wird, erfährt das zwischen der Wägezelle und dem Lastaufnehmer angeordnete Lastübertragungsglied eine Verkürzung und der Lastaufnehmer gerät in Anlage mit dem Gehäuse, wodurch die am Lastaufnehmer angreifenden Kräfte direkt über das Gehäuse abgestützt werden.

Vorzugsweise weist der Lastaufnehmer eine plane Oberfläche auf, damit dieser auf einfache Weise gereinigt werden kann und die Wägegüter stabil aufliegen. Ferner erleichtert eine plane Oberfläche auch den Anbau einsatzspezifischer Vorrichtungen. Diese können beispielsweise mittels geeigneter Klemmvorrichtungen am Lastaufnehmer festgeklemmt werden. Selbstverständlich kann am Lastaufnehmer auch mindestens eine Montagestelle, beispielsweise eine Bohrung, die auch Gewinde aufweisen kann, zur Befestigung einsatzspezifischer Vorrichtungen ausgebildet sein.

Wie bereits weiter oben ausgeführt wurde, kann die Mittellängsachse der Lagerstelle beziehungsweise des Exzenterbolzens orthogonal zur Mittellängsachse des Lastübertragungsgliedes angeordnet sein. Damit der Exzenterbolzen montiert werden kann, muss am Lastaufnehmer eine seitliche Bohrung vorhanden, die es gegebenenfalls abzudichten gilt, damit sich nicht Schmutz in der Bohrung ansammeln kann oder sogar Schmutz und Flüssigkeiten ins Innere des Gehäuses vordringen können. Der Einsatz einer Dichtung kann aber dazu führen, dass der Exzenterbolzen bei der Demontage nur mit Mühe entfernt werden kann. Vorzugsweise ist deshalb ein elastisches Auswurfelement vorhanden, mittels welchem beim Lösen der Lastaufnehmer- Fixierung der Exzenterbolzen zumindest teilweise aus den Bohrungen gedrückt wird. Als elastisches Auswurfelement eignen sich beispielsweise Schraubendruckfedern, Gummielemente, Gaszylinder und dergleichen mehr.

Grundsätzlich können der Anschlag und der Gegenanschlag als zueinander gerichtete, ebene Flächen ausgebildet sein. Durch die Spannkraft wird der Anschlag gegen den Gegenanschlag gedrückt. Bei ausreichender Spannkraft kann sich infolge der zwischen den Anschlägen vorhandenen Reibungskraft der Lastaufnehmer nicht mehr in horizontaler Richtung verschieben, selbst wenn am Lastaufnehmer horizontal gerichtete Kräfte angreifen. Um aber das Verbinden von Lastaufnehmer und Lastübertragungsglied zu erleichtern und insbesondere eine vorgegebene, präzise Ausrichtung zueinander zu ermöglichen, können der Lastaufnehmer und das Lastübertragungsglied formschlüssige Positionierungselemente aufweisen. Als Positionierungselemente eignen sich Vorsprünge, Stifte und Bohrungen, Kragen, Hülsen, Konturen mit Fasen und dergleichen mehr.

Das gravimetrische Messinstrument und dessen erfinderische Befestigung des Lastaufnehmers werden anhand der folgenden Figuren näher beschrieben, wobei gleiche Elemente mit denselben Bezugszeichen versehen sind. Es zeigen:

Figur 1    eine dreidimensionale Darstellung eines gravimetrischen Messinstruments in der Ausführung eines Wägemoduls mit einem fixierten Lastaufnehmer;

Figur 2    das in der Figur 1 dargestellte Wägemodul in der Aufsicht und im Schnitt;

Figur 3    eine dreidimensionale Explosionsdarstellung des Lastaufnehmers, des Exzenterbolzens und eines Teils des Lastübertragungsgliedes;

Figur 4    der in der Figur 3 dargestellte Lastaufnehmer in der Aufsicht und im Schnitt, wobei die Schnittebene die Mittellängsachsen des Exzenterbolzens und des Lastübertragungsgliedes enthält;

Figur 5    der in der Figur 3 dargestellte Lastaufnehmer in der Aufsicht und im Schnitt, wobei die Schnittebene die Mittellängsachsen des Lastübertragungsgliedes enthält und orthogonal zur Mittellängsachse des Exzenterbolzens verläuft;

Figur 6     eine schematische Darstellung des Exzenterzylinders und der ersten Bohrung im fixierten Zustand sowie die wichtigsten, durch die Fixierung vorhandenen Kräfte.

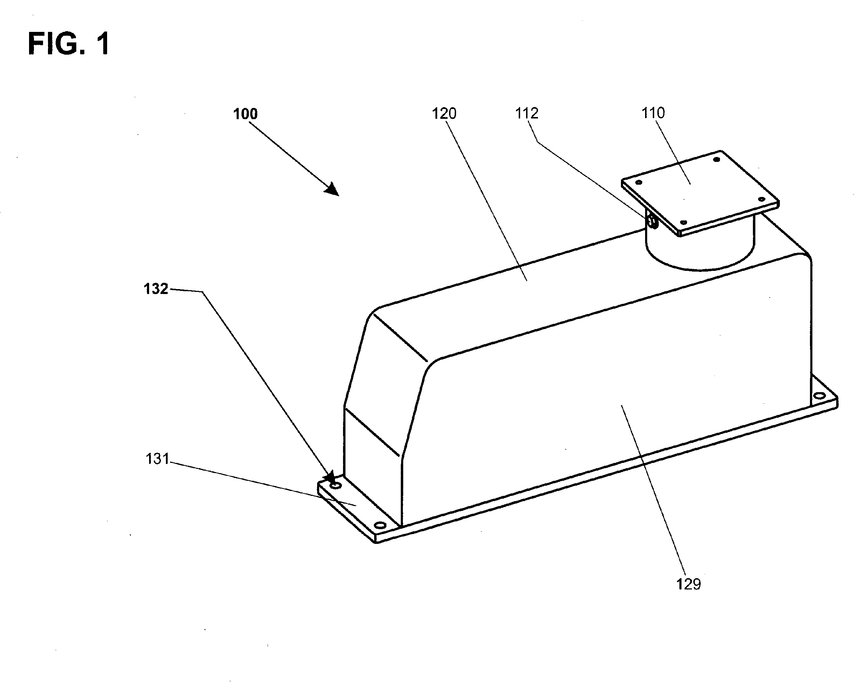

Die Figur 1 zeigt eine dreidimensionale Darstellung eines gravimetrischen Messinstruments 100 in der Ausführung eines Wägemoduls 120 mit einem fixierten Lastaufnehmer 110. Das Wägemodul 120 weist eine Grundplatte 131 und ein mit der Grundplatte 131 lösbar verbundenes Gehäuse 129 auf. Im Innern des Gehäuses 129 ist eine nicht dargestellte Wägezelle angeordnet. Die Grundplatte 131 ist mit Befestigungsstellen 132 versehen, so dass das Wägemodul 120 beispielsweise in einer mehrspurigen Wägeanlage eingebaut werden kann. Der Lastaufnehmer 110 ist mittels eines Exzenterbolzens 112 an einem ebenfalls nicht einsehbaren Lastübertragungsglied starr fixiert.

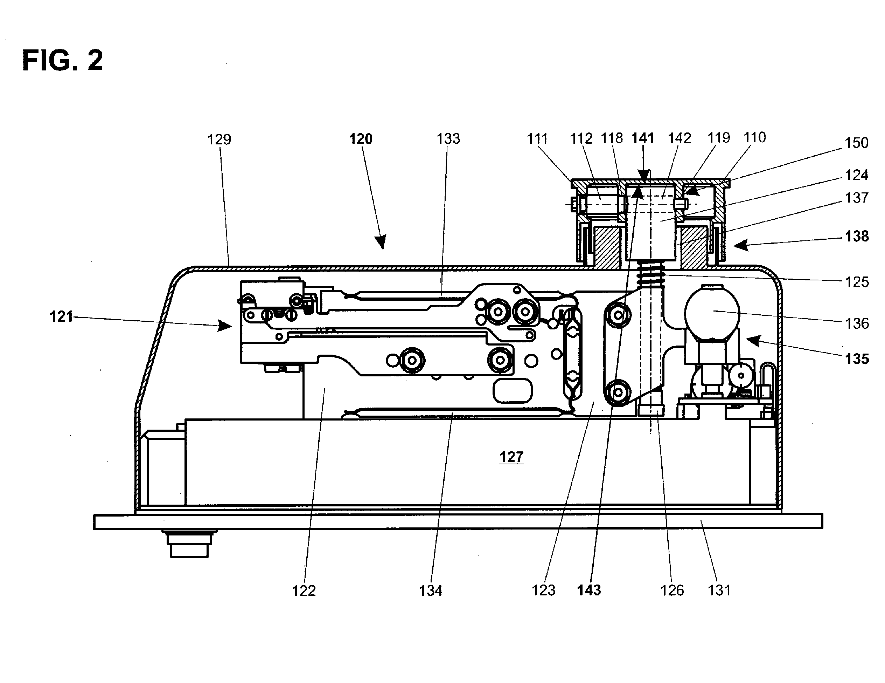

Die Figur 2 zeigt das in der Figur 1 beschriebene Wägemodul 120 in der Aufsicht, wobei dessen Gehäuse 129 und der Lastaufnehmer 110 im Schnitt dargestellt sind. Im Innern des Gehäuses 129 ist eine Wägezelle 121 angeordnet, welche eine Parallelführung aufweist. Die Parallelführung beinhaltet einen feststehenden Parallelschenkel 122 und einen beweglichen Parallelschenkel 123, wobei der bewegliche Parallelschenkel 123 mittels zweier Parallellenker 133, 134 mit dem feststehenden Parallelschenkel 122 verbunden ist. Der feststehende Parallelschenkel 122 ist durch einen Zwischenträger 127 an der Grundplatte 131 festgelegt.

Ferner ist eine Kalibriervorrichtung 135 auf dem Zwischenträger 127 angeordnet, dessen Kalibriergewicht 136 mit dem beweglichen Parallelschenkel 123 in Wirkverbindung gebracht werden kann.

Der bewegliche Parallelschenkel 123 ist mit einem Lastübertragungsglied 124 verbunden. Diese Verbindung ist aber nicht starr. Das Lastübertragungsglied 124 ist am beweglichen Parallelschenkel 123 in vertikaler Richtung linear geführt und weist einen Überlastsicherungsanschlag 126 auf. Ferner ist eine Überlastsicherungsfeder 125 zwischen dem Lastübertragungsglied 124 und dem beweglichen Parallelschenkel 123 angeordnet. Die Federkraft der Überlastsicherungsfeder 125 ist etwas höher als die maximal zulässige, auf den Lastaufnehmer 110 auflegbare Last. Sobald eine höhere Last auf den Lastaufnehmer 110 aufgelegt wird, gibt die Überlastsicherungsfeder 125 nach und der Überlastsicherungsanschlag 126 steht am Zwischenträger 127 an. Durch diese Überlastschutzvorrichtung kann eine mechanische Zerstörung der Wägezelle 121 vermieden werden.

Das Lastübertragungsglied 124 reicht durch eine Durchführung 137 des Gehäuses 129 hindurch, so dass an dessen, der Wägezelle 121 abgewandtem Ende der Lastaufnehmer 110 fixierbar ist. Wie der Schnitt durch den Lastaufnehmer 110 und das Gehäuse 129 zeigt, ist zwischen dem Lastaufnehmer 110 und dem Gehäuse 129 eine Labyrinthdichtung 138 ausgebildet, welche mehrere wechselseitig angeordnete, das Lastübertragungsglied 124 umfassende konzentrische Ringelemente umfasst. Der Lastaufnehmer 110 weist ein als Ringelement ausgestaltetes Positionierungselement 150 auf, welches das Lastübertragungselement 124 satt umfasst. An dieser Stelle sei erwähnt, dass das Positionierungselement 150 nicht zwingend erforderlich ist, aber die Montage und Ausrichtung des Lastaufnehmers 110 zum Lastübertragungsglied 124 erheblich erleichtert.

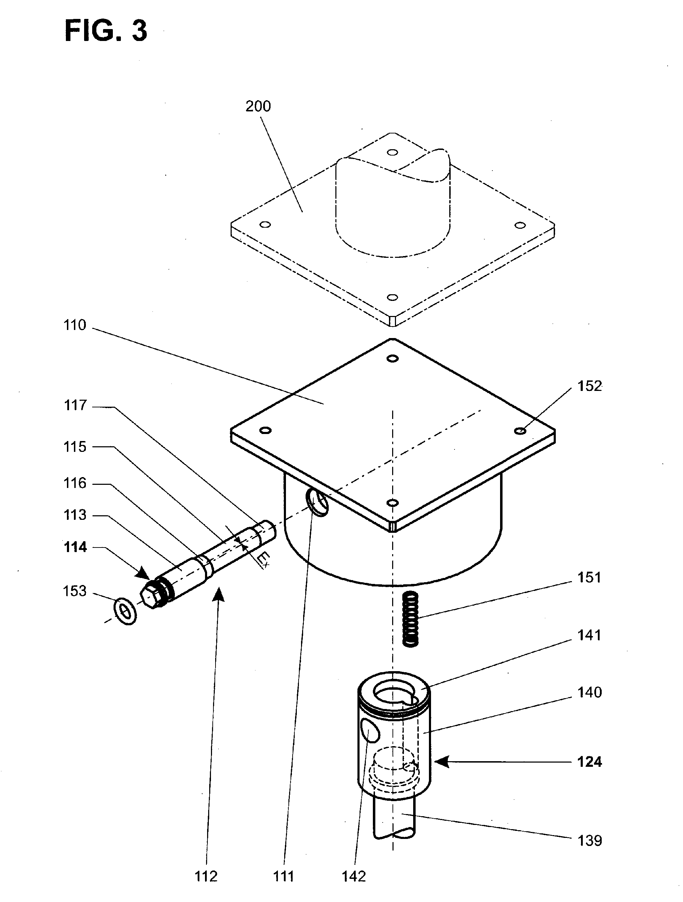

Ferner ist der Exzenterbolzen 112 erkennbar, welcher in am Lastaufnehmer 110 und am Lastübertragungsglied 124 ausgebildeten Bohrungen 111, 118, 119, 142 steckt. Jede der Bohrungen weist eine ganz bestimmte Funktion auf. Die am Lastübertragungsglied 124 ausgebildete erste Bohrung 142 dient als Ansatzstelle für den Exzenterbolzen 112, genauer für dessen Exzenterzylinder 115, welcher in Zusammenhang mit der Figur 3 beschrieben wird. Die am Lastaufnehmer 110 beziehungsweise an dessen Positionierungselement 150 ausgebildete zweite Bohrung 118, und vierte Bohrung 119 dienen ebenfalls als Ansatzstellen für den Exzenterbolzen 112, genauer zur Aufnahme der in Figur 3 beschriebenen Lagerstellen 116, 117. Es könnte aber auch nur eine zweite Bohrung 118 für nur eine Lagerstelle vorhanden sein. Ferner weist der Lastaufnehmer 110 eine dritte Bohrung 111 auf, durch welche ein Exzenterbolzen 112 überhaupt eingesetzt und mittels einer Drehung um seine Mittellängsachse verspannt werden kann. Dies geschieht dadurch, dass durch Drehung des in die Bohrungen 111, 118, 119, 142 eingesetzten Exzenterbolzens 112 die erste Bohrung 142 von der zweiten Bohrung 118 weg bewegt wird, so dass ein am Lastübertragungsglied 124 ausgebildeter Anschlag 141 gegen einen am Lastaufnehmer 110 ausgebildeten Gegenanschlag 143 gepresst wird.

Durch die dritte Bohrung 111 bleibt der Exzenterbolzen 112 jederzeit von Aussen zugänglich. Ferner dient die zylindrische Fläche der dritten Bohrung 111 als Dichtungsfläche einer in der Figur 3 gezeigten elastischen Dichtung 153, so dass kein Schmutz und keine Flüssigkeiten über diesen Weg in die Labyrinthdichtung 138 eindringen können.

Figur 3 zeigt eine dreidimensionale Explosionsdarstellung des Lastaufnehmers 110, des Exzenterbolzens 112 und eines Teils des Lastübertragungsgliedes 124. Der Lastaufnehmer 110 weist vier Montagestellen 152 auf. Diese können der Befestigung einsatzspezifischer Vorrichtungen 200 dienen, beispielsweise von speziellen Aufnahmen für Behälter, Förderbänder und dergleichen mehr. Aufgrund der Variabilität dieser dem Betriebseinsatz der Wägemodule angepassten Adapter ist die einsatzspezifische Vorrichtung 200 in strichpunktierter Linie dargestellt.

Die Figur 3 zeigt auch einen herausragenden Vorteil der erfindungsgemässen Befestigung. Der Lastaufnehmer 110 kann von der Wägezelle getrennt mit der einsatzspezifischen Vorrichtung 200 verbunden werden. Dadurch kann die Wägezelle vor Kräften geschützt werden, die während dieser Montage auftreten. Das Verbinden des Lastaufnehmers 110 inklusive der einsatzspezifischen Vorrichtung 200 mit dem Lastübertragungsglied 124 erfolgt anschliessend auf die bereits vorangehend beschriebene Weise mit dem Exzenterbolzen 112. Selbstverständlich können die verbindungsspezifischen Elemente des Lastaufnehmers 110 auch direkt an der einsatzspezifischen Vorrichtung 200 ausgebildet sein.

Der Lastaufnehmer 110 weist ferner die bereits in der Figur 2 beschriebene dritte Bohrung 111 auf, sowie die nicht sichtbare zweite und vierte Bohrung. Das Lastübertragungsglied 124 beinhaltet einen vorzugsweise aus Metall gefertigten Stab 139 und einen mit diesem formschlüssig verbundenen Kopf 140 aus einem Wärme isolierenden Material, beispielsweise einer Keramik oder einem Kunststoff. Im Kopf 140 ist zudem die erste Bohrung 142 ausgebildet. Mit dem derart ausgestalteten Kopf 140 weist das Lastübertragungsglied 124 ein Material mit geringer Wärmeleitfähigkeit auf, wodurch der Lastaufnehmer 110 von der Wägezelle thermisch getrennt ist. Wie weiter oben beschrieben, sollte der Lastaufnehmer 110 aber elektrisch mit der Wägezelle verbunden sein, weshalb im Bereich des Kopfes 140 eine Kontaktierungsfeder 151 angeordnet ist. Ebenfalls sichtbar ist der als Ringfläche ausgebildete Anschlag 141.

Der Exzenterbolzen 112 ist im Wesentlichen stabförmig ausgebildet, wobei die erste Lagerstelle, 116, die zweite Lagerstelle 117, eine Dichtungsringnute 114 zur Aufnahme einer elastischen Dichtung 153 und ein Zwischenteil 113 auf derselben Mittellängsachse angeordnet sind. Zwischen der ersten Lagerstelle 116 und der zweiten Lagerstelle 117 ist ein Exzenterzylinder 115 ausgebildet, dessen Mittellängsachse zwar parallel zur Mittellängsachse der Lagerstellen 116, 117, aber um die Exzentrizität Ex von dieser beabstandet ist.

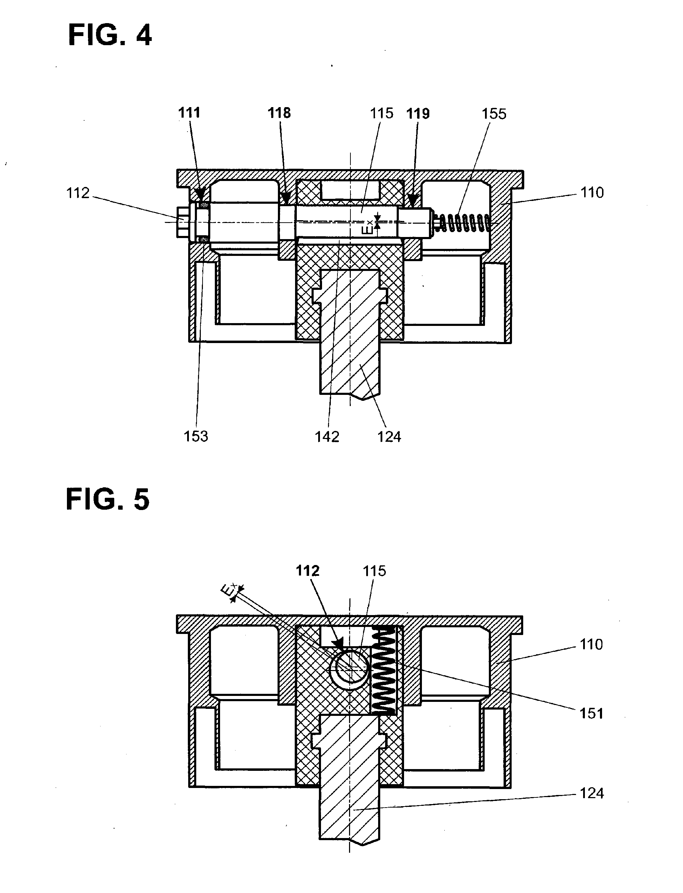

Figur 4 zeigt den in der Figur 3 dargestellten Lastaufnehmer 110 am Lastübertragungsglied 124 fixiert in der Aufsicht und im Schnitt, wobei die Schnittebene die Mittellängsachsen des Exzenterbolzens 112 und des Lastübertragungsgliedes 124 enthält. In der Figur 4 ist die Anordnung des Exzenterbolzens 112 und dessen Exzenterzylinder 115 deutlich erkennbar, sowie dessen Exzentrizität $E_X$ zur Mittellängsachse des Exzenterbolzens 112. Dieser steckt in der dritten Bohrung 111, in der zweiten Bohrung 118, in der vierten Bohrung 119 und in der ersten Bohrung 142. Die Bohrungen 111, 118, 119, 142 weisen einen zueinander abgestuften Durchmesser auf, so dass der Exzenterbolzen 112 problemlos eingeführt werden kann. Auch die elastische Dichtung 153 ist in ihrer Einbaulage in der dritten Bohrung 111 erkennbar. Aufgrund der notwendigen Pressung der elastischen Dichtung 153 kann es sein, dass der Exzenterbolzen 112 bei der Demontage nur mit Mühe aus den Bohrungen 111, 118, 119, 142 entfernt werden kann. Um die Demontage zu erleichtern, kann der Exzenterbolzen 112 eine als Auswurfelement 155 dienende Schraubendruckfeder aufweisen. Deren Federkraft ist so gross, dass die von der elastischen Dichtung 153 verursachten Reibungen überwunden werden und der Exzenterbolzen 112 nach dem Lösen mittels einer Drehung um seine Mittellängsachse, vom Auswurfelement 155 aus den Bohrungen 111, 118, 119, 142 gedrückt wird.

Die Figur 5 zeigt wiederum den in der Figur 3 dargestellten Lastaufnehmer 110 in der Aufsicht und im Schnitt, wobei die Schnittebene die Mittellängsachsen des Lastübertragungsgliedes 124 enthält und orthogonal zur Mittellängsachse des Exzenterbolzens 112 verläuft. Gut ersichtlich ist auch die Lage des Exzenterzylinders 115 im verspannten Zustand. Um eine fehlerhafte Montage des Lastaufnehmers 110 zu vermeiden, muss die Exzentrizität $E_X$ in Abstimmung mit den vorhandenen Elastizitäten des Lastaufnehmers 110, des Exzenterbolzens 112 und des Lastübertragungsgliedes 124 so gross gewählt werden, dass der Exzenterbolzen 112 niemals um 360° gedreht werden kann. Des Weiteren ist erkennbar, dass durch die Kontaktierungsfeder 151 eine elektrische Verbindung mit hoher Dämpfungswirkung bezüglich der Übertragung von elektromagnetischen Störungen auf die Wägezelle vorhanden ist.

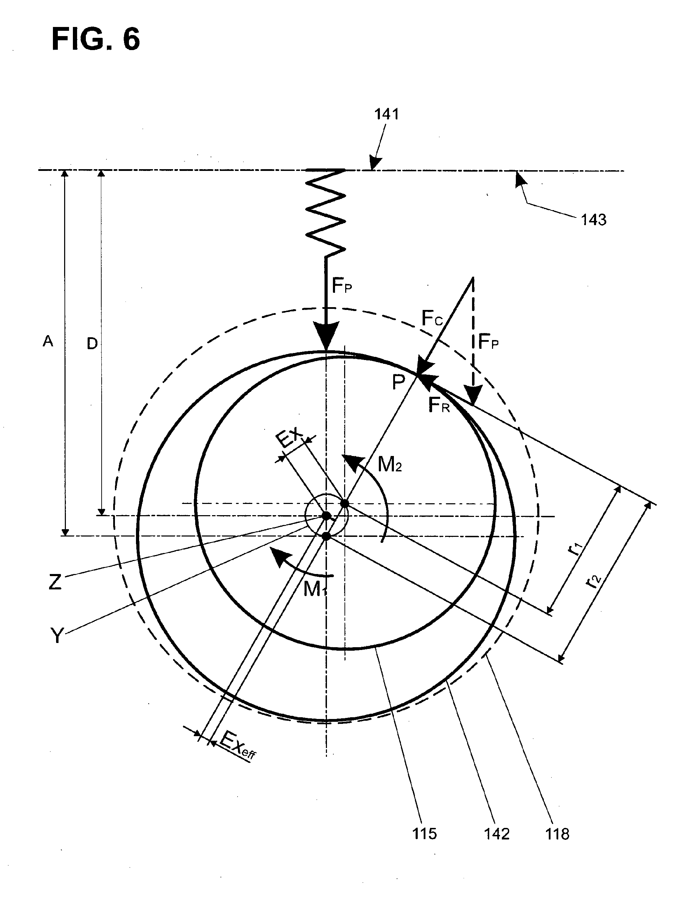

Figur 6 zeigt eine schematische Darstellung des Exzenterzylinders 115 und der ersten Bohrung 142 im fixierten und dementsprechend verspannten Zustand, sowie die wichtigsten, durch die Fixierung vorhandenen Kräfte. Zur Orientierung ist ferner die zweite Bohrung 118 in unterbrochener Linie gezeichnet, durch deren Zentrum Z die Mittellängsachse des Exzenterbolzens orthogonal zur Zeichnungsebene verläuft. Diese Mittellängsachse ist gleichzeitig die Drehachse des Exzenterbolzens und dementsprechend auch von dessen Exzenterzylinder 115. Durch Drehen des Exzenterbolzens 112 um seine Mittellängsachse und im Gegenuhrzeigersinn, wird die um die Exzentrizität $E_X$ beabstandete Mittellängsachse des Exzenterzylinders 115 auf einer Kreisbahn Y und im Wesentlichen entgegen der Schwerkraftrichtung verschoben. Entsprechend wird die erste Bohrung 142 relativ zur zweiten Bohrung 118 entgegen der Schwerkraftrichtung verschoben, bis, wie mit strichpunktierter Linie dargestellt, der Anschlag 141 gegen den Gegenanschlag 143 ansteht.

Da die Distanz D zwischen dem Gegenanschlag 143 und der Mittellängsachse der zweiten Bohrung 118 kleiner ist als die Summe aus dem Abstand A zwischen dem Anschlag 141 und der Mittellängsachse der ersten Bohrung 142, der Exzentrizität $E_X$ und dem Radius $r_1$ des Exzenterzylinders 115, abzüglich des Radius $r_2$ der ersten Bohrung 142, kann der Anschlag 141 gegen den Gegenanschlag 143 gepresst werden. Durch weiteres Drehen des Exzenterbolzens kann eine drehwinkelabhängige Druckkraft $F_P$ im Material des Lastübertragungsgliedes zwischen dem Anschlag 141 und dem Exzenterzylinder 115 erzeugt werden. Wie dargestellt, wirkt das zwischen dem Exzenterbolzen 115 und dem Gegenanschlag 143 eingeklemmte Material des Lastübertragungsgliedes wie eine Feder mit der Druckkraft $F_P$ auf den Exzenterzylinder 115. Selbstverständlich darf der Exzenterbolzen nur soweit gedreht werden, dass der Lochleibungsdruck im Berührungspunkt P nicht zu gross wird. Beim Anziehen des Exzenterbolzens ist deshalb vorzugsweise ein Anziehdrehmoment vorzuschreiben.

Grundsätzlich sind die geometrischen Verhältnisse derart zu wählen und auf die Reibungsverhältnisse der Verbindungspartner abzustimmen, dass sich die mit dem Exzenterbolzen fixierte Verbindung nicht selbsttätig lösen kann. Die Druckkraft $F_P$ beziehungsweise deren Ersatzkraft $F_C$ greift im Berührungspunkt P des Exzenterzylinders 115 und der ersten Bohrung 142 an. Die Ersatzkraft $F_C$ verursacht durch die geometrischen Verhältnisse ein Drehmoment $M_1$, wobei der wirksame Hebelarm, bezeichnet als effektive Exzentrizität $E_{Xeff}$ nicht die eigentliche Exzentrizität $E_X$ ist, sondern der rechtwinklige Abstand des Zentrums Z zur Wirklinie der Ersatzkraft $F_C$. Diese Wirklinie verläuft logischerweise durch die Mittelpunkte des Exzenterzylinders 115 und der ersten Bohrung 118, sowie durch den Berührungspunkt P. Die im Berührungspunkt P angreifende Reibungskraft $F_R$ hängt von der Grösse der Ersatzkraft $F_C$ und dem im Berührungspunkt P vorhandenen Reibungskoeffizienten $\mu$ ab. Diese vermag das Drehmoment $M_1$ zu halten, da der wirksame Hebelarm dieses Gegendrehmoments $M_2$ ungefähr dem Radius $r_1$ entspricht. Ausgehend von diesen geometrischen Verhältnissen und dem Reibungskoeffizienten $\mu$ kann die Exzentrizität $E_X$, die dem Exzenterbolzen selbsthemmende Eigenschaften verleihen, näherungsweise mit folgender Formel bestimmt werden:

$$E_X \approx \mu \ast r_1$$

Da in den Lagestellen ebenfalls Reibungskräfte vorhanden sind, die einer selbsttätigen Drehung des Exzenterbolzens entgegenwirken, ist ein ausreichender Sicherheitsfaktor gegen unbeabsichtigtes Lösen vorhanden.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem der Exzenterbolzen nur bis zur Mittellängsachse des Lastübertragungsgliedes reicht. Ferner muss die Mittellängsachse des Exzenterbolzens nicht die Mittellängsachse des Lastübertragungsgliedes schneiden oder orthogonal zu dieser angeordnet sein. Grundsätzlich ist jede Lage des Exzenterbolzens zum Lastübertragungsglied denkbar, die geeignet ist, einen am Lastübertragungsglied ausgebildeten Anschlag gegen einen am Lastaufnehmer ausgebildeten Gegenanschlag zu pressen. Ferner können verschiedenste Mittel wie Hülsen, Bohrungen, Stifte, Anschläge, Vorsprünge und dergleichen vorhanden sein, die geeignet sind, den Lastaufnehmer zum Lastübertragungsglied formschlüssig zu positionieren.

**Bezugszeichenliste**

| | |
|---|---|
| 100 | gravimetrisches Messinstrument |
| 110 | Lastaufnehmer |
| 111 | dritte Bohrung |
| 112 | Exzenterbolzen |
| 113 | Zwischenteil |
| 114 | Dichtungsringnute |
| 115 | Exzenterzylinder |
| 116 | erste Lagerstelle |
| 117 | zweite Lagerstelle |
| 118 | zweite Bohrung |
| 119 | vierte Bohrung |
| 120 | Wägemodul |
| 121 | Wägezelle |
| 122 | feststehender Parallelschenkel |
| 123 | beweglicher Parallelschenkel |
| 124 | Lastübertragungsglied |
| 125 | Überlastsicherungsfeder |
| 126 | Überlastsicherungsanschlag |
| 127 | Zwischenträger |
| 129 | Gehäuse |
| 131 | Grundplatte |
| 132 | Befestigungsstelle |
| 133 | erster Parallellenker |
| 134 | zweiter Parallellenker |
| 135 | Kalibriervorrichtung |
| 136 | Kalibriergewicht |
| 137 | Durchführung |
| 138 | Labyrinthdichtung |
| 139 | Stab |
| 140 | Kopf |
| 141 | Anschlag |
| 142 | erste Bohrung |
| 143 | Gegenanschlag |
| 150 | Positionierungselement |
| 151 | Kontaktierungsfeder |
| 152 | Montagestelle |
| 153 | elastische Dichtung |
| 155 | Auswurfelement |
| 200 | einsatzspezifische Vorrichtung |
| A | Abstand |
| D | Distanz |
| P | Berührungspunkt |
| Y | Kreisbahn |
| Z | Zentrum |
| $E_X$ | Exzentrizität |
| $E_{Xeff}$ | effektive Exzentrizität |
| $r_1$ | Radius des Exzenterzylinders |
| $r_2$ | Radius der ersten Bohrung |

μ      Reibungskoeffizient
$M_1$      Drehmoment
$M_2$      Gegendrehmoment
$F_C$      Ersatzkraft
$F_P$      Druckkraft
$F_R$      Reibungskraft

## Patentansprüche

1. Gravimetrisches Messinstrument (100) mit einem Gehäuse (129) und einer Wägezelle (121), welche Wägezelle (121) in dem Gehäuse (129) angeordnet ist und ein Lastübertragungsglied (124) aufweist, welches durch eine Durchführung (137) des Gehäuses (129) hindurchreicht und mit dem ein Lastaufnehmer (110) lösbar verbindbar ist, **dadurch gekennzeichnet, dass** zwischen dem Gehäuse (129) und dem Lastaufnehmer (110) ein berührungsfreies Dichtungssystem (138) angeordnet ist, wobei am Lastübertragungsglied (124) ein Anschlag (141) und am Lastaufnehmer (110) ein Gegenanschlag (143) ausgebildet ist, dass mittels eines am Lastaufnehmer (110) und am Lastübertragungsglied (124) angreifenden Exzenterbolzens (112) der Anschlag (141) gegen den Gegenanschlag (143) spannbar ist und dadurch der Lastaufnehmer (110) am Lastübertragungsglied (124) starr fixierbar ist.

2. Gravimetrisches Messinstrument (100) nach Anspruch 1, **dadurch gekennzeichnet, dass** bei fixiertem Lastaufnehmer (110) der Anschlag (141) und der Gegenanschlag (143) in einer Ebene orthogonal zur Lastrichtung angeordnet sind.

3. Gravimetrisches Messinstrument (100) nach Anspruch 1 oder 2, **dadurch gekennzeichnet, dass** der Exzenterbolzen (112) mindestens eine Lagerstelle (116, 117) und mindestens einen Exzenterzylinder (115) aufweist, welcher Exzenterzylinder (115) zur Lagerstelle (116, 117) mit einer definierten Exzentrizität ($E_X$) angeordnet ist.

4. Gravimetrisches Messinstrument (100) nach Anspruch 3, **dadurch gekennzeichnet, dass** sich bei fixiertem Lastaufnehmer (110) die Mittellängsachse des Lastübertragungsgliedes (124) und die Mittellängsachse der Lagerstelle (116, 117) orthogonal schneiden.

5. Gravimetrisches Messinstrument (100) nach Anspruch 3 oder 4, **dadurch gekennzeichnet, dass** das Lastübertragungsglied (124) mindestens eine erste Bohrung (142) zur Aufnahme des Exzenterzylinders (115) aufweist und der Lastaufnehmer (115) mindestens eine zweite Bohrung (118) zur Aufnahme der Lagerstelle (116, 117) aufweist, wobei die Distanz (D) zwischen dem Gegenanschlag (143) und der Mittellängsachse der zweiten Bohrung (118) kleiner ist als die Summe aus dem Abstand (A) zwischen dem Anschlag (141) und der Mittellängsachse der ersten Bohrung (142), der Exzentrizität ($E_X$) und dem Radius ($r_1$) des Exzenterzylinders (115), abzüglich dem Radius ($r_2$) der zweiten Bohrung (118).

6. Gravimetrisches Messinstrument (100) nach Anspruch 5, **dadurch gekennzeichnet, dass** bei fixiertem Lastaufnehmer (110) die um ein Übersetzungsverhältnis korrigierte effektive Exzentrizität ($E_{Xeff}$) kleiner ist als das Produkt aus dem zwischen dem Exzenterzylinder (115) und der ersten Bohrung (142) vorhandenen Reibungskoeffizienten (μ) und dem Radius ($r_1$) des Exzenterzylinders (115), wobei das Übersetzungsverhältnis von der Position des Exzenterzylinders (115) in der ersten Bohrung (142) abhängig ist.

7. Gravimetrisches Messinstrument (100) nach einem der Ansprüche 1 bis 6, **dadurch gekennzeichnet, dass** das Lastübertragungsglied (124) ein Material mit geringer Wärmeleitfähigkeit aufweist, insbesondere einen Kunststoff oder ein keramisches Material.

8. Gravimetrisches Messinstrument (100) nach einem der Ansprüche 1 bis 7, **dadurch gekennzeichnet, dass** die Wägezelle (121) und der Lastaufnehmer (110) aus elektrisch leitfähigem Material gefertigt sind und dass zwischen der Wägezelle (121) und dem Lastaufnehmer (110) eine elektrisch leitfähige Kontaktierungsfeder (151) angeordnet ist.

9. Gravimetrisches Messinstrument (100) nach Anspruch 8, **dadurch gekennzeichnet, dass** die Kontaktierungsfeder (151) eine Schraubendruckfeder oder Schraubenzugfeder mit einer möglichst hohen Windungszahl ist.

10. Gravimetrisches Messinstrument (100) nach einem der Ansprüche 1 bis 9, **dadurch gekennzeichnet, dass** der Lastaufnehmer (110) eine plane Oberfläche aufweist.

11. Gravimetrisches Messinstrument (100) nach einem der Ansprüche 1 bis 10, **dadurch gekennzeichnet, dass** am Lastaufnehmer (110) mindestens eine Montagestelle (152) zur Befestigung einsatzspezifischer Vorrichtungen (200) ausgebildet ist.

12. Gravimetrisches Messinstrument (100) nach einem der Ansprüche 1 bis 11, **dadurch gekennzeichnet, dass** ein Auswurfelement (155) vorhanden ist, mittels welchem beim Lösen der Lastaufnehmer-Fixierung der Exzenterbolzen (112) zumindest teilweise aus den Bohrungen (111, 118, 119, 142) gedrückt wird.

**13.** Gravimetrisches Messinstrument (100) nach einem der Ansprüche 1 bis 12, **dadurch gekennzeichnet, dass** der Lastaufnehmer (110) und das Lastübertragungsglied (124) zur präzisen Ausrichtung zueinander Positionierungselemente (150) aufweisen.

**Claims**

**1.** Gravimetric measuring instrument (100) which comprises a housing (129) with a passage (137), and a weighing cell (121) with a load-transmitting member (124), wherein the weighing cell (121) is arranged in said housing (129) and the load-transmitting member (124) of the weighing cell (121) reaches through said passage (137) and wherein a load receiver (110) can be releasably connected to said load-transmitting member (124), **characterized in that** a contact-free sealing system (138) is arranged between the housing (129) and the load receiver (110)and wherein a mechanical stop (141) is formed on the load-transmitting member (124) and a mechanical counter stop (143) is formed on the load receiver (110), and that by means of an eccentric bolt (112) engaging the load receiver (110) and the load-transmitting member (124) the mechanical stop (141) can be clamped against the mechanical counter stop (143), whereby the load receiver (110) can be rigidly secured to the load-transmitting member (124).

**2.** Gravimetric measuring instrument (100) according to claim 1, **characterized in that**, when the load receiver (110) is in the secured condition, the mechanical stop (141) and the mechanical counter stop (143) are lying in a plane that is perpendicular to the direction of the load.

**3.** Gravimetric measuring instrument (100) according to claim 1 or 2, **characterized in that** the eccentric bolt (112) has at least one bearing section (116, 117) and at least one eccentric cylinder (115), wherein said eccentric cylinder (115) is arranged with a defined eccentricity ($E_X$) relative to the bearing section (116, 117).

**4.** Gravimetric measuring instrument (100) according to claim 3, **characterized in that** - when the load receiver (110) is in the secured condition - the central longitudinal axis of the load-transmitting member (124) and the central longitudinal axis of the bearing section (116, 117) intersect at a right angle.

**5.** Gravimetric measuring instrument (100) according to claim 3 or 4, **characterized in that** the load-transmitting member (124) has at least a first bore hole (142) to receive the eccentric cylinder (115), and the load receiver (110) has at least a second bore hole (118) to receive the bearing section (116, 117), wherein the distance (D) between the mechanical counter stop (143) and the central longitudinal axis of the second bore hole (118) is smaller than the result of adding together the spacing (A) between the mechanical stop (141) and the central longitudinal axis of the first bore hole (142), the amount of eccentricity ($E_X$), and the radius ($r_1$) of the eccentric cylinder (115), and subtracting the radius ($r_2$) of the first bore hole (142).

**6.** Gravimetric measuring instrument (100) according to claim 5, **characterized in that** - when the load receiver (110) is in the secured condition - the effective eccentricity ($E_{X\text{eff}}$), which has been corrected by a leverage ratio, is smaller than the product of the coefficient of friction ($\mu$) which exists between the eccentric cylinder (115) and the first bore hole (142) multiplied with the radius ($r_1$) of the eccentric cylinder (115), wherein the leverage ratio depends on the position of the eccentric cylinder (115) within the first bore hole (142).

**7.** Gravimetric measuring instrument (100) according to one of the claims 1 to 6, **characterized in that** the load-transmitting member (124) comprises a material of low thermal conductivity, specifically a polymer or a ceramic material.

**8.** Gravimetric measuring instrument (100) according to one of the claims 1 to 7, **characterized in that** the weighing cell (121) and the load receiver (110) are made of an electrically conductive material and that an electrically conductive contact spring (151) is arranged between the weighing cell (121) and the load receiver (110).

**9.** Gravimetric measuring instrument (100) according to claim 8, **characterized in that** the contact spring (151) is a helical compression spring or a helical tension spring with as many windings as possible.

**10.** Gravimetric measuring instrument (100) according to one of the claims 1 to 9, **characterized in that** the load receiver (110) has a planar surface.

**11.** Gravimetric measuring instrument (100) according to one of the claims 1 to 10, **characterized in that** at least one mounting location (152) for the attachment of application-specific devices (200) is formed on the load receiver (110).

**12.** Gravimetric measuring instrument (100) according to one of the claims 1 to 11, **characterized by** the presence of an ejector element (155) whereby in the process of releasing the connection of the load receiver the eccentric bolt (112) is pushed at least partially out of the bore holes (111, 118, 119, 142).

**13.** Gravimetric measuring instrument (100) according to one of the claims 1 to 12, **characterized in that** the load receiver (110) and the load-transmitting member (124) comprise positioning elements (150) for the precise alignment of the load receiver (110) and the load-transmitting member (124) in relation to each other.

**Revendications**

**1.** Instrument de mesure gravimétrique (100) avec un boîtier (129) et une cellule de pesage (121), ladite cellule de pesage (121) étant agencée dans le boîtier (129) et comportant un élément de transmission de charge (124) traversant un perçage (137) du boîtier (129) et auquel un récepteur de charge (110) peut être relié de façon détachable, **caractérisé en ce qu'**un système d'étanchéité (138) sans contact est agencé entre le boîtier (129) et le récepteur de charge (110) et **en ce qu'**une butée (141) est formée sur l'élément de transmission de charge (124) et une contre-butée (143) est formée sur le récepteur de charge (110), **en ce que** la butée (141) peut être serrée contre la contre-butée (143) au moyen d'un boulon excentrique (112) agissant sur le récepteur de charge (110) et l'élément de transmission de charge (124), permettant ainsi de fixer le récepteur de charge (110) de façon immobile sur l'élément de transmission de charge (124).

**2.** Instrument de mesure gravimétrique (100) selon la revendication 1, **caractérisé en ce que** lorsque le récepteur de charge (110) est fixé, la butée (141) et la contre-butée (143) sont agencées dans un plan orthogonal à la direction de chargement.

**3.** Instrument de mesure gravimétrique (100) selon la revendication 1 ou 2, **caractérisé en ce que** le boulon excentrique (112) comporte au moins un point d'appui (116, 117) et au moins un cylindre excentrique (115), ledit cylindre excentrique (115) étant agencé avec une excentricité définie ($E_X$) par rapport au point d'appui (116, 117).

**4.** Instrument de mesure gravimétrique (100) selon la revendication 3, **caractérisé en ce que** lorsque le récepteur de charge (110) est fixé, l'axe longitudinal médian de l'élément de transmission de charge (124) et l'axe longitudinal médian du point d'appui (116, 117) se croisent orthogonalement.

**5.** Instrument de mesure gravimétrique (100) selon la revendication 3 ou 4, **caractérisé en ce que** l'élément de transmission de charge (124) comporte au moins un premier perçage (142) pour l'admission du cylindre excentrique (115), et le récepteur de charge (115) comporte au moins un deuxième perçage (118) pour l'admission du point d'appui (116, 117), dans lequel la distance (D) entre la contre-butée (143) et l'axe longitudinal médian du deuxième perçage (118) est inférieure à la somme de l'écart (A) entre la butée (141) et l'axe longitudinal médian du premier perçage (142), de l'excentricité (Ex) et du rayon ($r_1$) du cylindre excentrique (115), moins le rayon ($r_2$) du deuxième perçage (118).

**6.** Instrument de mesure gravimétrique (100) selon la revendication 5, **caractérisé en ce que** lorsque le récepteur de charge (110) est fixé, l'excentricité effective ($E_{Xeff}$) corrigée d'un rapport de transmission est inférieure au produit des coefficients de friction ($\mu$) présents entre le cylindre excentrique (115) et le premier perçage (142) et du rayon ($r_1$) du cylindre excentrique (115), dans lequel le rapport de transmission dépend de la position du cylindre excentrique (115) dans le premier perçage (142).

**7.** Instrument de mesure gravimétrique (100) selon l'une des revendications 1 à 6, **caractérisé en ce que** l'élément de transmission de charge (124) comporte un matériau avec une faible conductivité thermique, en particulier un plastique ou une matière céramique.

**8.** Instrument de mesure gravimétrique (100) selon l'une des revendications 1 à 7, **caractérisé en ce que** la cellule de pesage (121) et le récepteur de charge (110) sont réalisés à partir d'un matériau électriquement conducteur, et **en ce qu'**un ressort de contact électriquement conducteur (151) est agencé entre la cellule de pesage (121) et le récepteur de charge (110).

**9.** Instrument de mesure gravimétrique (100) selon la revendication 8, **caractérisé en ce que** le ressort de contact (151) est un ressort de pression hélicoïdal ou un ressort de tension hélicoïdal avec un nombre de spires aussi élevé que possible.

**10.** Instrument de mesure gravimétrique (100) selon l'une des revendications 1 à 9, **caractérisé en ce que** le récepteur de charge (110) comporte une surface plane.

**11.** Instrument de mesure gravimétrique (100) selon l'une des revendications 1 à 10, **caractérisé en ce qu'**au moins un point de montage (152) pour la fixation de dispositifs spécifiques à l'application (200) est formé sur le récepteur de charge (110).

**12.** Instrument de mesure gravimétrique (100) selon l'une des revendications 1 à 11, **caractérisé en ce qu'**il est prévu un élément d'éjection (155), au moyen duquel le cylindre excentrique (112) est au moins partiellement poussé hors des perçages (111, 118, 119, 142) lors du détachement de la fixation du récepteur de charge.

**13.** Instrument de mesure gravimétrique (100) selon l'une des revendications 1 à 12, **caractérisé en ce que** le récepteur de charge (110) et l'élément de transmission de charge (124) comportent des éléments de positionnement (150) pour une orientation précise l'un par rapport à l'autre.

# FIG. 1

100

110

112

120

129

132

131

**FIG. 2**

EP 2 278 285 B1

# FIG. 3

# FIG. 4

# FIG. 5

# FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005055753 A1
- EP 1576343 B1